# EUROPEAN PATENT SPECIFICATION

(11) **EP 4 273 777 B1**
(45) Date of publication and mention of the grant of the patent: **02.09.2026**
(21) Application number: 22922525.5
(22) Date of filing: 24.11.2022
(51) Int. Cl.: G06Q 20/34, G06Q 20/40, G06Q 20/36, G06Q 20/38, G06K 7/10, G06N 3/08, G16Y 10/50, G16Y 20/40, G16Y 40/10, G06Q 20/32

(54) **METHOD FOR REGISTERING USER ON HOLDERLESS CARD USING VIRTUAL CODE FOR AUTHENTICATION**
VERFAHREN ZUR REGISTRIERUNG EINES BENUTZERS AUF EINER HALTERLOSEN KARTE MIT VIRTUELLEM CODE ZUR AUTHENTIFIZIERUNG
PROCÉDÉ POUR ENREGISTRER UN UTILISATEUR SUR UNE CARTE SANS SUPPORT À L'AIDE D'UN CODE VIRTUEL POUR UNE AUTHENTIFICATION

(30) Priority: 04.03.2022 KR 20220027972; 21.11.2022 KR 20220156436
(43) Date of publication of application: 08.11.2023
(73) Proprietor: SSenStone Inc., Seoul 02622 (KR)
(72) Inventor: YOO, Chang Hun, Seoul 07064 (KR)
(74) Representative: HGF
(86) International application number: PCT/KR2022/018676
(87) International publication number: WO 2023/167390

(56) References cited:
- JP-A- 2018 506 093
- KR-A- 20160 036 471
- KR-A- 20170 040 469
- KR-A- 20200 018 284
- KR-A- 20210 119 945
- KR-B1- 101 751 894
- US-A1- 2020 051 065
- US-A1- 2020 104 833
- EMV: "EMV Integrated Circuit Card Specifications for Payment Systems Book 3 Application Specification Version 4.3", 1 November 2011 (2011-11-01), XP055527907, Retrieved from the Internet <URL:https://www.emvco.com/wp-content/plugins/pmpro-customizations/oy-getfile.php?u=/wp-content/uploads/documents/EMV_v4.3_Book_3_Application_Specification_20120607062110791.pdf> [retrieved on 20181128]

## Description

### [TECHNICAL FIELD]

Embodiments of the inventive concept described herein relate to a method for registering a user in a holderless card by using an authentication virtual code.

### [BACKGROUND ART]

Code-type data is being used in a lot of fields. In addition to a card number or account number used to make a payment, the code-type data includes an IPIN number or a resident registration number for user identification.

However, the code data may be leaked when the code data is used. In the case of a card number, because an actual card number is recorded on a card surface as it is, the actual card number is visually exposed to other people. When a payment using a magnet is made, the card number is leaked to other people while being transmitted to a POS device.

A virtual code has been used to prevent the actual code from being leaked. However, there is a need for data for identifying a user to search for the actual code corresponding to the virtual code.

However, a one-time password (OTP) is inconvenient because a separate OTP generating device is required. In particular, a user terminal has security vulnerabilities due to leakage of seed data used for OTP generation.

Accordingly, an OTP code is generated in the same way as generating a virtual security code required for user authentication based on card data of a card possessed by many users. There is a need for a method of increasing security by not requiring a separate OTP generating device and preventing seed data from being leaked at the same time. However, an appropriate method for this has not yet been proposed.
US 2020051065A1 relates to relate to a method and a system for providing a financial transaction using an empty card, which generate a virtual card number generated not to be redundant at each time point, search for a real card number based on the generated virtual card number, and perform the financial transaction.

### [DETAILED DESCRIPTION OF THE INVENTION]

### [TECHINICAL PROBLEM]

Embodiments of the inventive concept provide a method for registering a user in a holderless card by using an authentication virtual code.

Problems to be solved by the inventive concept are not limited to the problems mentioned above, and other problems not mentioned will be clearly understood by those skilled in the art from the following description.

### [TECHNICAL SOLUTION]

The present invention is defined by the independent claims. Further aspects of the present invention are outlined in the dependent claim. According to an embodiment, a method, which is performed by a system including a holderless card having a physical form, a user terminal and a service server, and which is used to register a user in the holderless card by using an authentication virtual code, the method comprising: receiving , by the user terminal, a registration application from the service server providing a card issuance agency service; installing , by the user terminal, the received registration application; receiving , by the user terminal, a card number of a mobile card owned by the user, entered through the registration application; receiving , by the holderless card, current time data from the user terminal of the user through card tagging, the holderless card being in a state where the user is not registered; generating, by the holderless card, a virtual code for authenticating the user based on the current time data and pre-stored seed data by using an applet included in the holderless card; transmitting, by the holderless card, the virtual code to the user terminal; transmitting, by the user terminal, the virtual code and the card number of the mobile card, to the service server; searching, by the service server, for a card number of the holderless card stored in the service server based on the virtual code; and completing, by the service server, user registration by matching the card number of the holderless card with the card number of the mobile card, wherein the holderless card is produced by a provider of the card issuance agency service while the user is not registered, wherein after the user registration is completed, the holderless card is connected to the mobile card in the service server such that the user is registered, and the card number of the connected mobile card is used when the user requests an offline payment by using the holderless card, wherein, in the receiving, the current time data is received along with an APDU command for driving the applet, upon the card tagging, and wherein, in the generating, the applet is driven and generated depending on the APDU command.

Furthermore, the user registration in the second method may be made based on an eigenvalue of the user and the virtual code transmitted to the service server through the interface. When a payment is requested through the card for which the registration is completed, the card number of the card may be transmitted from a payment server to the service server through a payment network and may be used to extract the eigenvalue of the user.

According to an example not covered by the claims, a holderless card device having a physical form in a state where a user is not registered includes an NFC module that performs NFC-based communication when tagging a terminal of the user, and an IC module including an applet for generating a virtual code for authentication of the user. The IC module receives current time data from the user terminal through the NFC module when tagging the user terminal, allows the applet to generate a virtual code based on the current time data and pre-stored seed data, and makes a request for verification of the virtual code to the verification server by transmitting the virtual code to a verification server through the user terminal. When the card device is produced while the user is not registered, and the verification is completed, the card device is connected to a mobile card already owned by the user in the verification server such that the user is registered.

### [ADVANTAGEOUS EFFECTS OF THE INVENTION]

According to the above-mentioned problem solving means of the inventive concept, financial institutions may reduce the cost of producing and delivering physical cards by issuing cards through a linked card manufacturer or by using an external issuance agency service.

Moreover, cards may be customized by linking with a card manufacturer or using an external issuance agency service, and physical cards may be used as a new transaction item by using them for marketing.

Furthermore, an annual fee needs to be paid to use a conventional physical card. However, there is no need to pay an annual fee for a physical card by connecting a physical card to a mobile card and using the mobile card.

Effects of the inventive concept are not limited to the effects mentioned above, and other effects not mentioned will be clearly understood by those skilled in the art from the following description.

### [DESCRIPTION OF THE DRAWINGS]

FIG. 1 is a diagram schematically illustrating a system for registering a user in a holderless card by using an authentication virtual code, according to an embodiment of the inventive concept.
FIG. 2 is a schematic block diagram of a holderless card device, according to an example not covered by the claims.
FIG. 3 is a flowchart of a method of registering a user in a holderless card by using an authentication virtual code, according to an example not covered by the claims.
FIG. 4 is a diagram for describing how to register a user by connecting a physical card, in which the user is not registered, to a mobile card, according to an example not covered by the claims.
FIG. 5 is a diagram for describing a registration process when a verification server is a financial institution server, according to an example not covered by the claims.
FIGS. 6 and 7 are diagrams for describing a registration process in the case where a verification server is a service server operating as a card issuing agent, according to an embodiment of the inventive concept and example not covered by the claims, respectively.
FIG. 8 is a diagram illustrating a computing device, according to an example not covered by the claims.

### [BEST MODE]

The same reference numerals denote the same elements throughout the inventive concept. The inventive concept does not describe all elements of embodiments. Well-known content or redundant content in which embodiments are the same as one another will be omitted in a technical field to which the inventive concept belongs. A term such as 'unit, module, member, or block' used in the specification may be implemented with software or hardware. According to embodiments, a plurality of 'units, modules, members, or blocks' may be implemented with one component or a single 'unit, module, member, or block' may include a plurality of components.

Throughout this specification, when it is supposed that a portion is "connected" to another portion, this includes not only a direct connection, but also an indirect connection. The indirect connection includes being connected through a wireless communication network.

Furthermore, when a portion "comprises" a component, it will be understood that it may further include another component, without excluding other components unless specifically stated otherwise.

Throughout this specification, when it is supposed that a member is located on another member "on", this includes not only the case where one member is in contact with another member but also the case where another member is present between two other members.

Terms such as 'first', 'second', and the like are used to distinguish one component from another component, and thus the component is not limited by the terms described above.

Unless there are obvious exceptions in the context, a singular form includes a plural form.

In each step, an identification code is used for convenience of description. The identification code does not describe the order of each step. Unless the context clearly states a specific order, each step may be performed differently from the specified order.

Hereinafter, operating principles and embodiments of the inventive concept will be described with reference to the accompanying drawings.

Hereinafter, an embodiment of the inventive concept will be described in detail with reference to the accompanying drawings.

Prior to a description, the meaning of terms used in the present specification will be described briefly. However, because the description of terms is used to help the understanding of this specification, it should be noted that if the inventive concept is not explicitly described as a limiting matter, it is not used in the sense of limiting the technical idea of the inventive concept.

In this specification, a "character" is a component constituting a code and includes all or part of uppercase alphabet characters, lowercase alphabet characters, numerals, and special characters.

In this specification, a "code" refers to a string of characters.

In this specification, "authentication virtual code" may mean a one-time authentication code (OTAC) temporarily generated to register a user.

In this specification, a "holderless card" is a physical card equipped with an applet for generating a virtual code, and refers to a card produced and issued while a user is not assigned. The holderless card may not have a user assigned to it, but may store an actual card number capable of being used to make a payment after a process of registering a user.

In this specification, a "virtual code generation function" means a function that generates a virtual code. For example, one time password (OTP), etc. are included therein, but are not limited thereto.

In this specification, a 'detailed code generating function' refers to a function of generating each detailed code constituting the virtual code.

In this specification, the "detailed code combination function" refers to a function for generating a virtual code by combining or coupling a plurality of detailed codes.

In this specification, a 'unit count' is a unit set to a specific time interval and is defined to change as the time interval elapses. For example, 1 count may be used after being set to a specific time interval (e.g., 1.5 seconds).

In this specification, a 'storage location' refers to a point (count) on a track corresponding to a point in time when the registration of a card is requested by a user.

In this specification, "user registration" and "card registration" may be interpreted in the same meaning as performing registration by assigning a user to a holderless card in a form of a physical form in which the user is not specified.

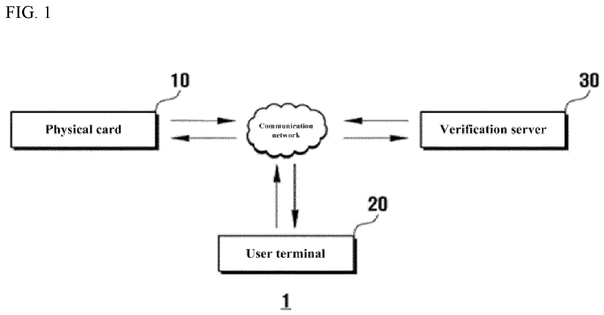

FIG. 1 is a diagram schematically illustrating a system for registering a user in a holderless card by using an authentication virtual code, according to an embodiment of the inventive concept.

Referring to FIG. 1, a system 1 (hereinafter referred to as a "system") for registering a user in a holderless card by using an authentication virtual code includes a physical card 10, a user terminal 20, and a verification server 30. However, in some embodiments, the system 1 may include fewer or more components than the components illustrated in FIG. 1.

The physical card 10 may be a holderless card manufactured and issued while a user is not specified (registered). Afterwards, when the user registration is completed through virtual code verification, the physical card 10 may be connected to a mobile card already possessed and employed by the user. In this specification, a "physical card" and a "holderless card" may be interpreted as the same meaning as each other.

Because the user is not specified, user-related information is not embedded in the physical card 10 at the time of manufacture. According to an embodiment, no information may be displayed on the surface of the physical card 10.

The physical card 10 may include an applet for generating an authentication virtual code, and may generate the authentication virtual code (hereafter referred to as a "virtual code") based on data received from the user terminal 20 and embedded data by using the applet. In an embodiment of the inventive concept, the physical card 10 may be a card device that performs various calculation processes for card registration by including the applet.

The user terminal 20 may transmit current time data to the physical card 10 when tagging the physical card 10.

The user terminal 20 may receive a virtual code from the physical card 10 and may transmit user information to the verification server 30 together with the virtual code.

The verification server 30 may verify the virtual code received from the user terminal 20. When it is determined that the received virtual code is normally generated at this point, the verification server 30 may complete user registration for the physical card 10. As such, the physical card 10 of the user may be connected to a mobile card that is already employed by a user. After that, when a payment is requested by using the physical card 10, the payment may be made with the mobile card connected to the physical card 10.

Referring to FIG. 1, the verification server 30 may be shown as being composed of one server, but may be composed of a system in which a plurality of servers are affiliated with each other.

As shown in FIG. 1, the physical card 10, the user terminal 20, and the verification server 30 may transmit and receive various types of data, signals, or information through a communication network.

Here, various types of communication networks may be used. For example, wireless communication methods such as wireless LAN (WLAN), Wi-Fi, Wibro, Wimax, High Speed Downlink Packet Access (HSDPA), and the like or wired communication methods such as Ethernet, xDSL (ADSL or VDSL), Hybrid Fiber Coax (HFC), Fiber to the Curb (FTTC), Fiber to the Home (FTTH), and the like may be used in a communication network.

In the meantime, the communication network is not limited to the communication method described above, and may include all types of communication methods widely known or to be developed in the future in addition to the above communication methods.

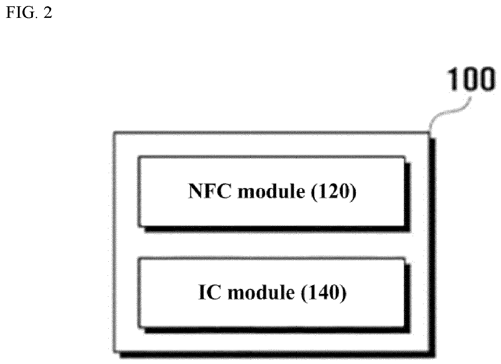

FIG. 2 is a schematic block diagram of a holderless card device, according to an example not covered by the claims. A holderless card device 100 in FIG. 2 means the physical card 10 described with reference to FIG. 1. In other words, the holderless card device 100 is manufactured while a user is not registered. When virtual code verification is completed, the holderless card device 100 may refer to the physical card 10 in which the user is registered by being connected to a mobile card already possessed by the user in the verification server 30.

Referring to FIG. 2, the holderless card device 100 may include a narrow frequency communication (NFC) module 120 and an IC module 140. However, in some embodiments, the holderless card device 100 may include fewer or more components than the components illustrated in FIG. 2.

The NFC module 120 (i.e., an NFC chip) may be a communication module and may perform NFC-based communication when tagging the user terminal 20.

The IC module 140 (i.e., an IC chip) may include an applet for generating a virtual code for authenticating a user. Although the IC module is described as including an applet, the IC module 140 may be an applet itself.

In more detail, the IC module 140 may include an EMV applet and an OTAC applet. A card number of the physical card 10 and an eigenvalue of the physical card 10 may be embedded in the EMV applet. Seed data for generating a virtual code (OTAC) may be embedded in the OTAC applet.

When tagging the user terminal 20, the IC module 140 may receive current time data from the user terminal 20 through the NFC module 120, may generate a virtual code based on the current time data and pre-stored seed data by using (controlling) the applet (in particular, the OTAC applet), and may transmit the virtual code to the user terminal 20 through the NFC module 120. The user terminal 20 may transmit the virtual code to the verification server 30 to request verification of the virtual code.

FIG. 2 shows that the holderless card device 100 includes only the NFC module 120. However, the holderless card device 100 may further include a separate communication module to communicate with the user terminal 20. In other words, the virtual code may be transmitted to the user terminal 20 through a separate communication module. Here, the separate communication module may include a wireless communication module and a short-range communication module.

The wireless communication module may support various wireless communication methods such as Global System for Mobile (GSM) communication, Code Division Multiple Access (CDMA), Wideband Code Division Multiple Access (WCDMA), Universal Mobile Telecommunication System (UMTS), Time Division Multiple Access (TDMA), Long Term Evolution (LTE), 4G, 5G, and 6G in addition to a wifi module and Wireless broadband module.

The short-range communication may be used for short range communication, and may support short-range communication by using at least one of Bluetooth^{™}, radio frequency identification (RFID), infrared data association (IrDA), ultra wideband (UWB), ZigBee, near field communication (NFC), Wireless-Fidelity (Wi-Fi), Wi-Fi Direct, and wireless universal serial bus (Wireless USB) technologies.

The IC module 140 is mounted on a PCB board to perform data exchange by contacting a terminal of an IC-type card reader. The IC module 140 includes an arbitrary form such as a component including an integrated circuit (IC) and a system on chip (SoC). For example, the IC chip may be of an ISO 14443 NXP Mifare Classic type according to an embodiment of the inventive concept, but is not limited thereto.

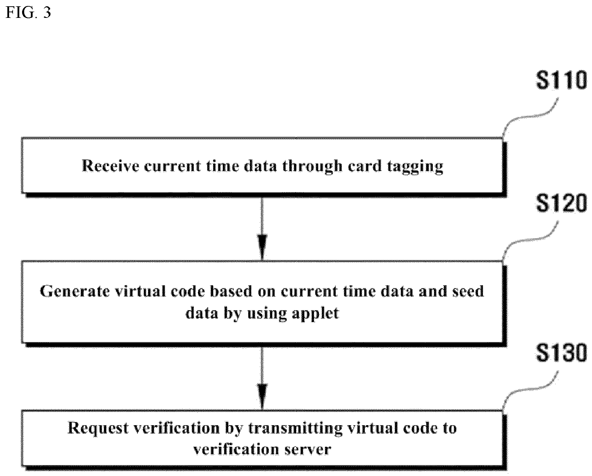

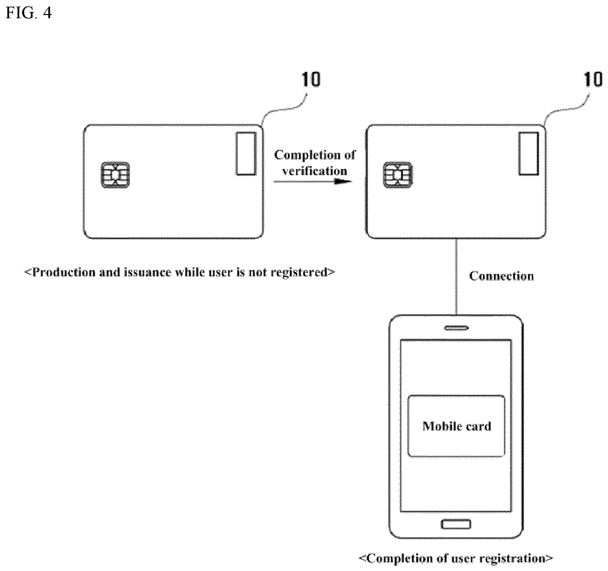

FIG. 3 is a flowchart of a method of registering a user in a holderless card by using an authentication virtual code, according to an example not covered by the claims. FIG. 4 is a diagram for describing how to register a user by connecting a physical card, in which the user is not registered, to a mobile card, according to an example not covered by the claims. The method of FIG. 3 may be performed by a holderless card. Hereinafter, although the method of FIG. 3 is described as being performed by the physical card 10 shown in FIG. 1, it may also be understood that the method of FIG. 3 is performed by the holderless card device 100.

In an embodiment of the inventive concept, when a user wants to use the physical card 10 for an offline payment by connecting the physical card 10 to a mobile card that is already registered and used in a financial institution application (app), user registration of the physical card 10 (holderless card) may be performed. In an embodiment of the inventive concept, the physical card 10 may be obtained by directly purchasing a user, rather than being delivered to the user by a financial institution.

Referring to FIG. 3, the physical card 10 may receive current time data from the user's terminal 20 (hereafter referred to as a "user terminal") through card tagging (S110).

The physical card 10 may generate a virtual code for user authentication based on the current time data and seed data pre-stored in the physical card by using the applet included in the card (S 120). At this time, the virtual code generated in each card may be generated so as not to be duplicated between cards by the seed data stored in the card.

The physical card 10 may request verification of the virtual code by transmitting the virtual code to the verification server 30 through the user terminal 20 (S130).

The physical card 10 receives the current time data together with an APDU command for driving the applet from the user terminal 20 when tagging the card.

That is, when the physical card 10 receives the APDU command and the current time data from the user terminal 20 through card tagging, the physical card 10 drives an applet based on the APDU command. Moreover, the virtual code may be generated based on the received current time data and the seed data for generating the virtual code already stored in the card, by using the running applet. The virtual code generated in this way may be transmitted to the user terminal 20.

The user terminal 20 may transmit at least one of user information logged into a financial service application and the received virtual code to the verification server 30. Here, the user information may include login information of a user and mobile card information that the user wants to connect with the physical card 10. Here, the financial service application may be an application built by a financial institution itself, or an application provided from an external server.

When it is determined that the virtual code is normally generated at this point, the verification server 30 may connect the physical card 10 to the mobile card to complete user registration for the physical card 10.

Referring to FIG. 3, the physical card 10 may be produced and issued while a user is not registered. The user may purchase the physical card 10, may register the physical card 10 in a financial institution application, and may connect the physical card 10 to the mobile card in use to perform card registration. In more detail, the user may install a financial service application in his/her user terminal 20 and may connect a mobile card already used to the physical card 10 through the corresponding application. In detail, when the verification server 30 completes verification of the virtual code generated by the physical card 10, the corresponding physical card 10 may be connected to the mobile card, and thus a user of the mobile card may be completely registered as a user of the physical card 10. Here, when the financial service application is an application built by a financial institution itself, the user registration may be performed by using one application provided by the financial institution. When the financial service application is an application received from an external server, the user registration may be performed by using the application provided by the financial institution and an application provided by an external service provider (i.e., two applications).

Hereinafter, a method in which the physical card 10, which operates as a virtual code generating device, generates a virtual code will be described in detail.

The OTAC applet included in the physical card 10 may generate one or more detailed codes. The detailed code means some codes constituting a virtual code. The virtual code may consist of only detailed codes, or may be formed in a form of a final virtual code (OTAC) by combining one or a plurality of detailed codes with a first virtual security code generated by an OTP function.

The OTAC applet includes a virtual code generation function for generating a virtual code. The virtual code generation function includes a detailed code generation function that generates one or more detailed codes, and a detailed code combination function (i.e., a rule for combining a plurality of detailed codes) that generates a virtual code by combining the detailed codes.

That is, when the virtual code includes a plurality of detailed codes. The virtual code generation function generates a plurality of detailed codes by using a plurality of detailed code generation functions, and generates a virtual security code by combining the plurality of detailed codes into a preset combination through the detailed code combination function.

The plurality of detailed codes have a correlation used such that the verification server 30 searches for a storage space of information capable of identifying a user or card. In other words, the verification server 30 includes a search algorithm (a storage space search algorithm). The search algorithm extracts a plurality of detailed codes included in the virtual code, and searches for the storage space of identification information assigned to the user or card based on the correlation between the plurality of detailed codes. As an embodiment of the correlation between the plurality of detailed codes, the search algorithm included in the verification server 30 may perform a calculation based on the correlation between the plurality of detailed codes from waypoints corresponding to one or more detailed codes among the plurality of detailed codes, and thus may search for a storage location of identification information of the user or card. At this time, there are one or more waypoints, and there is no limit to the number and order.

Furthermore, as an embodiment of a plurality of detailed codes, the plurality of detailed codes may include a first code and a second code. The OTAC applet generates the first code and the second code by including a first function and a second function as detailed code generation functions. The first code and the second code have a correlation for searching for a storage location of the identification information of the user or card within the verification server 30. However, the OTAC applet may include the first function for generating the first code and the second function for generating the second code as detailed code generation functions to improve security, and may not include data for the correlation between the first code and the second code.

As a specific example of the correlation between the first code and the second code, each of the first code and the second code may be used to search for the storage space of the identification information. In other words, the first code may include information about a waypoint. The second code may include information necessary for calculation capable of being reached from the waypoint to the storage location of the identification information.

In the meantime, in an embodiment of the inventive concept, the first code may be generated based on a first count. The second code may be generated based on a second count. In this case, the first count may include the number of unit counts that have elapsed from a first time point at which the virtual code generation function is driven in the verification server 30 to a time point at which the virtual code is generated. The second count may include the number of unit counts that have elapsed from a time point at which the identification information of the user or card is registered in the verification server 30.

In other words, the first function that generates the first code is a function that provides a specific code value corresponding to the first count, and the second function that generates the second code is a function that provides a specific code value corresponding to the second count.

Hereinafter, a method in which the verification server 30, which operates as a virtual code verification device, verifies a virtual code will be described in detail.

In an embodiment of the inventive concept, when receiving the virtual code from the user terminal 20, the verification server 30 may verify the virtual code by comparing time data regarding a time point, at which the virtual code is received, and time data of the virtual code.

In detail, the verification server 30 verifies whether the virtual code is normally generated. In other words, after receiving the virtual code, the verification server 30 determines whether the virtual code is normal, by determining whether the received virtual code is normally generated at the present time, based on information (i.e., a virtual code generation function and seed data) stored in the verification server 30. For example, the verification server 30 determines whether there is a value, which matches the virtual code, among OTP numbers calculated by entering counts within a specific range from a count, at which the virtual code is received, into the virtual code generation function (i.e. An OTP function). The verification server 30 searches for a count corresponding to a time point at which the virtual code is generated, by applying an inverse function of the virtual code generation function to the virtual code. As a difference between a time point at which the virtual code is generated and a time point at which the verification server 30 receives the virtual code is present due to the transmission time of the virtual code or delay, a count at which the verification server 30 receives the virtual code may not be the same as a count at which the OTP number corresponding to the virtual code is generated, and thus the verification server 30 allows an error range from the count at which the virtual code is received.

In the meantime, in an embodiment of the inventive concept, the verification server 30 may extract the identification information of the user or card by searching for the storage location of the identification information of the user or card based on the virtual code, and may perform user authentication based on the extracted identification information.

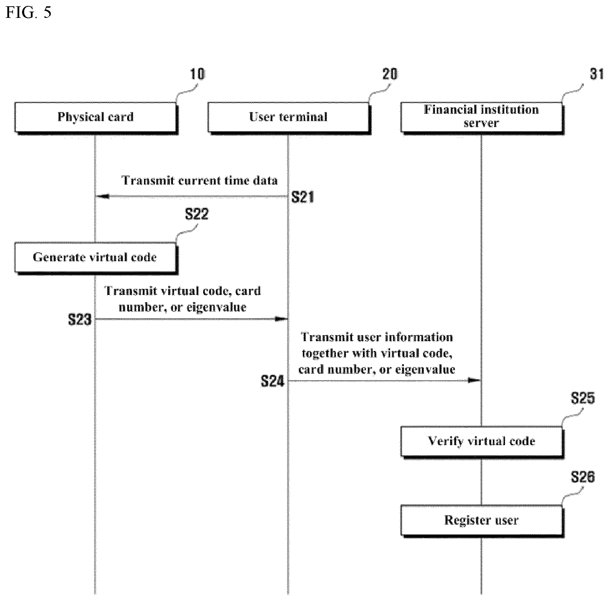

FIG. 5 is a diagram for describing a registration process when a verification server is a financial institution server, according to an example not covered by the claims. Hereinafter, a user registration process in the case where a financial institution produces and issues the physical card 10 by itself will be described with reference to FIG. 5.

In this case, the verification server 30 becomes the financial institution server 31. The physical card 10 is produced by a card manufacturer affiliated with a financial institution.

In S130, as well as the virtual code, the physical card 10 may further transmit at least one of a card number of the physical card 10 and an eigenvalue of the physical card 10, which are previously stored in the physical card 10, to the verification server 30 through the user terminal 20.

Moreover, when verification of the virtual code is completed, at least one of the seed data in the verification server 30, the card number of the physical card 10, and the eigenvalue of the physical card 10 may be matched with user information generated by the user terminal 20 and then may be stored.

In more detail, when the verification is completed, the verification server 30 may extract seed data included in the virtual code and may complete user registration for the corresponding physical card 10 by matching at least one of the extracted seed data, the card number of the physical card 10, and the eigenvalue of the physical card 10 with the user information. Here, the user information may include login information of a user logged into a financial institution application, and information (a mobile card number) of a mobile card possessed by the user.

The card number of the physical card 10, the eigenvalue of the physical card 10, and the seed data are transmitted to a server of a card manufacturer by the verification server 30 and are embedded in an IC chip (EMV applet and OTAC applet) when the physical card 10 is manufactured. That is, the card number of the physical card 10, the eigenvalue of the physical card 10, and the seed data of the physical card 10 may be already stored in the verification server 30.

Here, the card number of the physical card 10 may include an identification code (e.g., BIN) of the financial institution. The eigenvalue of the physical card 10 may be a value sequentially assigned to each card manufactured by the card manufacturer. The card manufacturer may install a virtual code (OTAC) server on a WAS server within the financial institution system and may sequentially input the eigenvalue provided by the virtual code (OTAC) server when manufacturing a physical card.

According to an embodiment, when the physical card 10 transmits the virtual code, the card number of the physical card 10, and the eigenvalue of the physical card 10 to the verification server 30 through the user terminal 20, the verification server 30 may completely verify the virtual code and then may match seed data extracted from the virtual code, the card number of the physical card 10, and the eigenvalue of the physical card 10 with user information so as to be stored.

According to an embodiment, when the physical card 10 transmits the virtual code and the card number of the physical card 10 to the verification server 30 through the user terminal 20, the verification server 30 may completely verify the virtual code and then may match seed data extracted from the virtual code and the card number of the physical card 10 with the user information so as to be stored.

According to an embodiment, when the physical card 10 transmits the virtual code and the eigenvalue of the physical card 10 to the verification server 30 through the user terminal 20, the verification server 30 may completely verify the virtual code and then may match seed data extracted from the virtual code and the eigenvalue of the physical card 10 with the user information so as to be stored.

According to an embodiment, when the physical card 10 transmits first information (e.g., a card number) among the virtual code, the card number of the physical card 10, and the eigenvalue of the physical card 10 to the verification server 30 through the user terminal 20, the verification server 30 may completely verify the virtual code, may extract seed data from the virtual code, may extract second information (e.g., an eigenvalue) from the received first information (e.g., a card number) among the card number and the eigenvalue of the physical card 10, and may match the extracted seed data, the extracted second information (e.g., an eigenvalue), the received first information (e.g., a card number), and received user information so as to be stored.

Referring to FIG. 5, when tagging is made between the physical card 10 and the user terminal 20, the user terminal 20 may transmit current time data to the physical card 10 (S21). The physical card 10 may generate a virtual code based on the received current time data and pre-stored seed data (S22). The physical card 10 may transmit at least one of the generated virtual code, the pre-stored card number of the physical card 10, and the pre-stored eigenvalue of the physical card 10 to the user terminal 20 (S23). The user terminal 20 transmits user information to the financial institution server 31 together with at least one of the received virtual code, the card number of the physical card 10, and the eigenvalue of the physical card 10 (S24). The financial institution server 31 may perform verification to determine whether the virtual code is a normally generated code at this time (S25). When it is determined that the virtual code is a normal code (when the verification is completed), the financial institution server 31 may complete user registration for the physical card 10 by matching at least one of the seed data, the card number of the card, and the eigenvalue of the card, with user information (S26).

Accordingly, the physical card 10 and the mobile card are connected to each other within the financial institution server 31. Afterward, when a user requests an offline payment by using the physical card 10, a payment may be made by using the mobile card connected to the physical card 10. Here, the physical card 10 and the mobile card may be connected by matching and storing the physical card number and the mobile card number in the financial institution server 31.

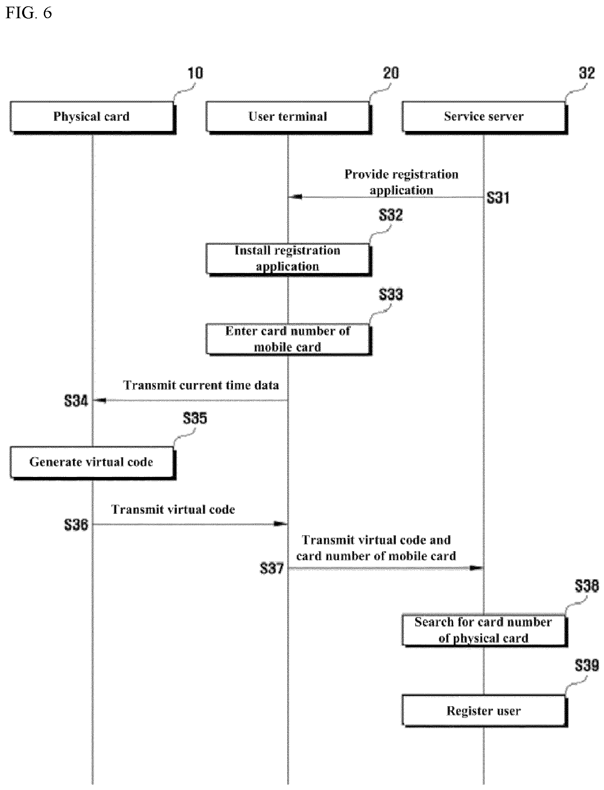

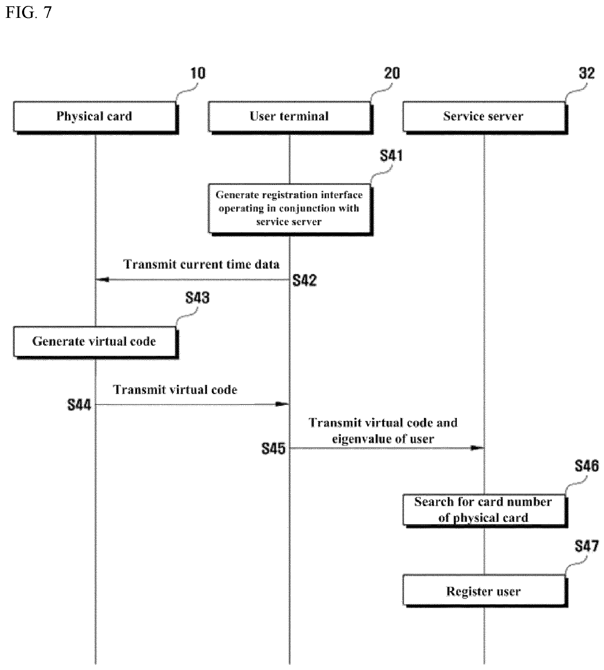

FIGS. 6 and 7 are diagrams for describing a registration process in the case where a verification server is a service server operating as a card issuing agent, according to an example not covered by the claims. Hereinafter, a process of registering a user in the case where a financial institution uses the physical card 10 produced externally will be described with reference to FIGS. 6 and 7. The reason that financial institutions use externally produced physical cards without producing their own physical cards is that the financial institutions need a service capable issuing a physical card to users while reducing related costs (physical card production and shipping cost) because the number of physical cards capable of being used offline is decreasing nowadays, and physical cards and mobile car /mobile payments are coexisting.

When the physical card 10 produced by a service provider operating as an agent for card issuance is used, the verification server 30 becomes a service server 32 (hereinafter referred to as a "service server") operating as an agent for card issuance, and the physical card 10 is produced by a provider of a card issuance agency service.

When the physical card 10 manufactured by the service provider is used, user registration may be made in an application-based first method for physical card registration or an interface-based second method for physical card registration.

### - User Registration Method when User Registration is performed in First Method

The user terminal 20 may be provided with a registration application provided by the service server 32.

After a card number of a mobile card already owned by a user is entered through the registration application, user registration in the first method may be made through tagging between the physical card 10 and the user terminal 20.

Here, user registration in the first method may be made by matching the card number of the physical card 10 found by the service server 32 based on the virtual code with the card number of the mobile card.

Afterward, when the user requests a payment by using the registered physical card 10, the card number of the physical card 10 may be transmitted from a payment server (not shown) to the service server 32 through a payment network, and the card number of the mobile card matched to the card number of the physical card 10 may be transmitted from the service server 32 to the payment server through the payment network.

In this case, the service server 32 may bill the financial institution depending on the number of payments made by using the physical card 10 (a physical card number) and the number of users who employ the physical card 10 issued through a card issuance agency service.

Referring to FIG. 6, the service server 32 provides an application for registration to the user terminal 20 (S31). The user terminal 20 installs an application for registration (S32). The user enters the card number of the mobile card, which he/she is employing, through the application for registration (S33). Next, when tagging is made between the physical card 10 and the user terminal 20, the user terminal 20 transmits current time data to the physical card 10 (S34). The physical card 10 generates a virtual code based on the received current time data and pre-stored seed data (S35). The physical card 10 transmits the generated virtual code to the user terminal 20 (S36). The user terminal 20 transmits the virtual code and the card number of the mobile card, which is entered by the user, to the service server 32 (S37). The service server 32 searches for the card number of the physical card 10 based on the virtual code (S38). In particular, the issuance agent server 32 may extract seed data included in the virtual code and may search for a physical card number that is stored in the server after being matched with the seed data. The service server 32 completes user registration by matching the found card number of the physical card with the card number of the mobile card (S39).

Accordingly, when the user requests an offline payment by using the physical card 10, the service server 32 receives a card number of a physical card from a payment server (not shown) through a payment network. The service server 32 provides the card number (a mobile card number) of the mobile card matched to the received card number (a physical card number) of the physical card to the payment server through the payment network such that the payment server makes a payment by using the mobile card number.

### - User Registration Method when User Registration is performed in Second Method

A registration interface operating in conjunction with the card issuance agency service may be generated in a financial institution application installed in the user terminal 20. Afterward, when the physical card 10 is tagged on the user terminal 20, user registration in the second method may be made through the registration interface. At this time, the registration interface may be generated through the interlocking between SDK and API of the service server 32.

Here, user registration in the second method may be made based on an eigenvalue of a user and the virtual code transmitted to the service server 32 through the registration interface.

Afterward, when the card number (a physical card number) of the physical card 10 is transmitted from the payment server (not shown) to the service server 32 through the payment network in the case where the user requests a payment by using the registered physical card 10, the service server 32 may extract the eigenvalue of the user by using the received physical card number. The service server 32 may transmit the user's eigenvalue to the financial institution server based on the extracted eigenvalue of the user and financial institution information. The financial institution server may make a payment by searching for the card number (a mobile card number) of the mobile card issued to the user by using the user's eigenvalue. Here, the eigenvalue of the user may mean the user's identification information for a specific mobile card for which the connection with the physical card 10 is requested.

**In** this case, the service server 32 may bill the financial institution depending on the number of payments made by using the physical card 10 and the number of users who employ the physical card 10 issued through a card issuance agency service.

Referring to FIG. 7, a registration interface operating in conjunction with the service server 32 may be generated in the financial institution application installed in the user terminal 20 (S41). **In** this case, the registration interface may be generated when a user selects a specific mobile card, which the user wants to connect with the actual card 10, from among mobile cards registered in the financial institution application. Next, when tagging is made between the physical card 10 and the user terminal 20, the user terminal 20 may transmit current time data to the physical card 10 (S42). The physical card 10 may generate a virtual code based on the received current time data and pre-stored seed data (S43). The physical card 10 may transmit the generated virtual code to the user terminal 20 (S44). The user terminal 20 may transmit the virtual code and the eigenvalue of the user to the service server 32 (S45). Here, the eigenvalue of the user may mean user identification information for the specific mobile card. The service server 32 may search for the card number (a physical card number) of the physical card 10 based on the virtual code (S46). **In** particular, the service server 32 may extract seed data included in the virtual code, and may search for a physical card number that is stored in the server after being matched with the seed data. The service server 32 may complete user registration by matching the found card number of the physical card with the eigenvalue of the user (S47).

Accordingly, when the user requests an offline payment by using the physical card 10, the service server 32 may receive a card number of a physical card from a payment server (not shown) through a payment network. The service server 32 may transmit the eigenvalue of the user to the corresponding financial institution server by using financial institution information and the user's eigenvalue matched to the received card number (a physical card number) of the physical card. The financial institution server may make a payment by searching for the card number of the mobile card connected to the corresponding actual card 10 by using the received eigenvalue of the user.

In the meantime, in the above description, operations in FIGS. 3 and 5 to 7 may be further divided into additional operations or may be combined into fewer operations, according to an embodiment of the inventive concept. In addition, some operations may be omitted as necessary, and the order between operations may be changed.

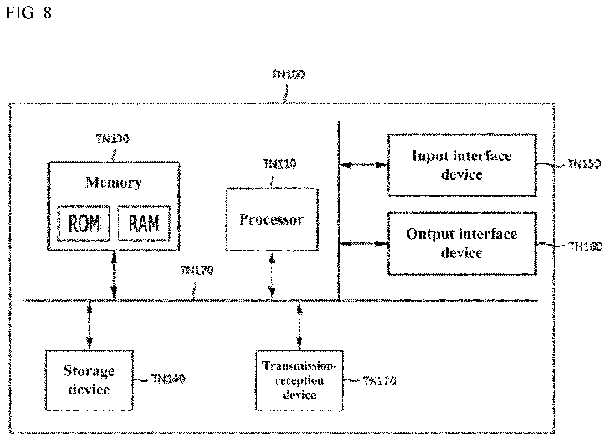

FIG. 8 is a diagram illustrating a computing device, according to an example not covered by the claims. A computing device TN100 may be a device (e.g., the user terminal 20, the verification server 30, or the like) described in this specification.

The computing device TN100 may include at least one processor TN110, a transmission/reception device TN120, and a memory TN130. Moreover, the computing device TN100 may further include a storage device TN140, an input interface device TN150, an output interface device TN160, and the like. The components included in computing device TN100 may be connected by a bus TN170 so as to communicate with one another.

The processor TN110 may execute a program command stored in at least one of the memory TN130 and the storage device TN140. The processor TN110 may be a central processing unit (CPU), a graphics processing unit (GPU), or a dedicated processor performing methods according to an embodiment of the inventive concept. The processor TN110 may be configured to implement procedures, functions, and methods described in relation to an embodiment of the inventive concept. The processor TN110 may control each component of the computing device TN100.

Each of the memory TN130 and the storage device TN140 may store various pieces of information related to the operation of the processor TN110. Each of the memory TN130 and the storage device TN140 may be implemented with at least one of a volatile storage medium and a nonvolatile storage medium. For example, the memory TN130 may be implemented with at least one of a read only memory
(ROM) and a random access memory (RAM).

The transmission/reception device TN120 may transmit or receive wired or wireless signals. The transmission/reception device TN120 may perform communication by being connected to a network.

Meanwhile, the disclosed embodiments may be implemented in a form of a recording medium storing instructions executable by a computer. The instructions may be stored in a form of program codes, and, when executed by a processor, generate a program module to perform operations of the disclosed embodiments. The recording medium may be implemented as a computer-readable recording medium.

The computer-readable recording medium may include all kinds of recording media in which instructions capable of being decoded by a computer are stored. For example, there may be read only memory (ROM), random access memory (RAM), magnetic tape, magnetic disk, flash memory, optical data storage device, and the like.

Disclosed embodiments are described above with reference to the accompanying drawings. One ordinary skilled in the art to which the inventive concept belongs will understand that the inventive concept may be practiced in forms other than the disclosed embodiments without altering the technical ideas or essential features of the inventive concept. The disclosed embodiments are examples and should not be construed as limited thereto.

## Claims

1. A method, which is performed by a system including a holderless card (10) having a physical form, a user terminal (20) and a service server (32), and which is used to register a user in the holderless card by using an authentication virtual code, the method comprising:
receiving (S31), by the user terminal, a registration application from the service server (32) providing a card issuance agency service;
installing (S32), by the user terminal, the received registration application;
receiving (S33), by the user terminal, a card number of a mobile card owned by the user, entered through the registration application;
receiving (S34), by the holderless card, current time data from the user terminal (20) of the user through card tagging, the holderless card being in a state where the user is not registered;
generating (S35), by the holderless card, a virtual code for authenticating the user based on the current time data and pre-stored seed data by using an applet included in the holderless card;
transmitting (S36), by the holderless card, the virtual code to the user terminal;
transmitting (S37), by the user terminal, the virtual code and the card number of the mobile card, to the service server (32);
searching (S38), by the service server, for a card number of the holderless card stored in the service server based on the virtual code; and
completing (S39), by the service server, user registration by matching the card number of the holderless card with the card number of the mobile card,
wherein the holderless card is produced by a provider of the card issuance agency service while the user is not registered,
wherein after the user registration is completed, the holderless card is connected to the mobile card in the service server such that the user is registered, and the card number of the connected mobile card is used when the user requests an offline payment by using the holderless card,
wherein, in the receiving, the current time data is received along with an APDU command for driving the applet, upon the card tagging, and
wherein, in the generating, the applet is driven and the virtual code is generated depending on the APDU command.

2. The method of claim 1,
wherein the card number of the holderless card is transmitted from a payment server to the service server through a payment network when a payment is requested through the holderless card for which the user registration is completed, and
wherein the card number of the mobile card matched to the card number of the holderless card is transmitted from the service server to the payment server through the payment network.

3. A system including a holderless card device (10, 100) having a physical form, a user terminal (20) and a service server (32) providing a card issuance agency service, the holderless card device comprising:
an NFC module (120) configured to perform NFC-based communication when tagging the user terminal of a user; and
an IC module (140) including an applet for generating a virtual code for authentication of the user,
wherein the holderless card device is in a state where the user is not registered,
wherein the IC module is configured to:
when tagging the user terminal (20), receive (S34) current time data from the user terminal (20) through the NFC module (120);
allow the applet to generate (S35) the virtual code based on the current time data and pre-stored seed data; and
transmit (S36) the virtual code to the user terminal, and
wherein the user terminal (20) is configured to:
receive (S31) a registration application from the service server (32);
install (S32) the received registration application;
receive (S33) a card number of a mobile card entered through the registration application;
after the card number of the mobile card is received, when the holderless card device is tagged to the user terminal, transmit (S34) current time data to the holderless card device; and
when the virtual code is received from the holderless card device, transmit, to the service server (32), the received virtual code the card number of the mobile card,
wherein the service server (32) is configured to:
transmit (S31) the registration application to the user terminal;
receive (S37) the virtual code and the card number of the mobile card from the user terminal;
search (S38) for a card number of the holderless card stored in the service server based on the virtual code; and
complete (S39) user registration by matching the searched card number of the holderless card with the received card number of the mobile card;
wherein the holderless card device is produced by a provider of the card issuance agency service while the user is not registered,
wherein after the user registration is completed, the holderless card device is connected to the mobile card in the service server such that the user is registered, and the card number of the connected mobile card is used when the user requests an offline payment by using the holderless card,
wherein the current time data is received along with an APDU command for driving the applet, upon the card tagging, and
wherein the applet is driven and the virtual code is generated depending on the APDU command.

## Patentansprüche

1. Verfahren, das durch ein System durchgeführt wird, das eine halterlose Karte (10) mit einer physischen Form, ein Benutzerendgerät (20) und einen Dienstserver (32) beinhaltet, und das verwendet wird, um einen Benutzer in der halterlosen Karte durch Verwendung eines virtuellen Authentifizierungscodes zu registrieren, wobei das Verfahren Folgendes umfasst:
Empfangen (S31), durch das Benutzerendgerät, einer Registrierungsanwendung von dem Dienstserver (32), der einen Kartenausstellungsagenturdienst bereitstellt;
Installieren (S32), durch das Benutzerendgerät, der empfangenen Registrierungsanwendung;
Empfangen (S33), durch das Benutzerendgerät, einer Kartennummer einer mobilen Karte, die dem Benutzer gehört, die durch die Registrierungsanwendung eingegeben wurde;
Empfangen (S34), durch die halterlose Karte, aktueller Zeitdaten von dem Benutzerendgerät (20) des Benutzers durch Kartenkennzeichung, wobei sich die halterlose Karte in einem Zustand befindet, in dem der Benutzer nicht registriert ist;
Generieren (S35), durch die halterlose Karte, eines virtuellen Codes zum Authentifizieren des Benutzers basierend auf den aktuellen Zeitdaten und vorab gespeicherten Seed-Daten durch Verwendung eines in der halterlosen Karte beinhalteten Applets;
Übertragen (S36), durch die halterlose Karte, des virtuellen Codes an das Benutzerendgerät;
Übertragen (S37), durch das Benutzerendgerät, des virtuellen Codes und der Kartennummer der mobilen Karte an den Dienstserver (32);
Suchen (S38), durch den Dienstserver, nach einer Kartennummer der in dem Dienstserver gespeicherten halterlosen Karte basierend auf dem virtuellen Code; und
Ausfüllen (S39), durch den Dienstserver, der Benutzerregistrierung durch Abgleich der Kartennummer der halterlosen Karte mit der Kartennummer der mobilen Karte,
wobei die halterlose Karte von einem Anbieter des Kartenausstellungsagenturdienstes hergestellt wird, während der Benutzer nicht registriert ist,
wobei nach Abschluss der Benutzerregistrierung die halterlose Karte mit der mobilen Karte in dem Dienstserver so verbunden wird, dass der Benutzer registriert wird, und die Kartennummer der verbundenen mobilen Karte verwendet wird, wenn der Benutzer eine Offline-Zahlung durch Verwendung der halterlosen Karte anfordert,
wobei beim Empfangen die aktuellen Zeitdaten zusammen mit einem APDU-Befehl zum Ansteuern des Applets bei der Kartenkennzeichnung empfangen werden und
wobei bei dem Generieren das Applet angesteuert wird und der virtuelle Code erzeugt wird in Abhängigkeit von dem APDU-Befehl.

2. Verfahren nach Anspruch 1,
wobei die Kartennummer der halterlosen Karte von einem Zahlungsserver durch ein Zahlungsnetzwerk an den Dienstserver übertragen wird, wenn eine Zahlung durch die halterlose Karte, für die die Benutzerregistrierung abgeschlossen ist, angefordert wird, und
wobei die Kartennummer der mobilen Karte, die mit der Kartennummer der halterlosen Karte übereinstimmt, von dem Dienstserver durch das Zahlungsnetzwerk an den Zahlungsserver übertragen wird.

3. System, das eine halterlose Kartenvorrichtung (10, 100) mit einer physischen Form, ein Benutzerendgerät (20) und einen Dienstserver (32) beinhaltet, der einen Kartenausstellungsagenturdienst bereitstellt, wobei die halterlose Kartenvorrichtung Folgendes umfasst:
ein NFC-Modul (120), das dazu konfiguriert ist, NFC-basierte Kommunikation durchzuführen, wenn das Benutzerendgerät eines Benutzers gekennzeichnet wird; und
ein IC-Modul (140), das ein Applet zum Generieren eines virtuellen Codes zur Authentifizierung des Benutzers beinhaltet,
wobei sich die halterlose Kartenvorrichtung in einem Zustand befindet, in dem der Benutzer nicht registriert ist,
wobei das IC-Modul zu Folgendem konfiguriert ist:
beim Kennzeichnen des Benutzerendgeräts (20) Empfangen (S34) aktueller Zeitdaten von dem Benutzerendgerät (20) durch das NFC-Modul (120);
Zulassen, dass das Applet den virtuellen Code basierend auf den aktuellen Zeitdaten und vorab gespeicherten Seed-Daten generiert (S35); und
Übertragen (S36) des virtuellen Codes an das Benutzerendgerät, und
wobei das Benutzerendgerät (20) zu Folgendem konfiguriert ist:
Empfangen (S31) einer Registrierungsanwendung von dem Dienstserver (32);
Installieren (S32) der empfangenen Registrierungsanwendung;
Empfangen (S33) einer Kartennummer einer mobilen Karte, die durch die Registrierungsanwendung eingegeben wurde;
nachdem die Kartennummer der mobilen Karte empfangen wurde, wenn die halterlose Kartenvorrichtung mit dem Benutzerendgerät gekennzeichnet ist, Übertragen (S34) aktueller Zeitdaten an die halterlose Kartenvorrichtung; und
wenn der virtuelle Code von der halterlosen Kartenvorrichtung empfangen wird, Übertragen, an den Dienstserver (32), des empfangenen virtuellen Codes die Kartennummer der mobilen Karte,
wobei der Dienstserver (32) zu Folgendem konfiguriert ist:
Übertragen (S31) der Registrierungsanwendung an das Benutzerendgerät;
Empfangen (S37) des virtuellen Codes und der Kartennummer der mobilen Karte von dem Benutzerendgerät;
Suchen (S38) nach einer Kartennummer der in dem Dienstserver gespeicherten halterlosen Karte basierend auf dem virtuellen Code; und
Ausfüllen (S39) der Benutzerregistrierung durch Abgleich der gesuchten Kartennummer der halterlosen Karte mit der empfangenen Kartennummer der mobilen Karte;
wobei die halterlose Kartenvorrichtung von einem Anbieter des Kartenausstellungsagenturdienstes hergestellt wird, während der Benutzer nicht registriert ist,
wobei nach Abschluss der Benutzerregistrierung die halterlose Kartenvorrichtung mit der mobilen Karte in dem Dienstserver so verbunden wird, dass der Benutzer registriert wird, und die Kartennummer der verbundenen mobilen Karte verwendet wird, wenn der Benutzer eine Offline-Zahlung durch Verwendung der halterlosen Karte anfordert,
wobei die aktuellen Zeitdaten zusammen mit einem APDU-Befehl zum Ansteuern des Applets bei der Kartenkennzeichnung empfangen werden und
wobei das Applet angesteuert wird und der virtuelle Code generiert wird in Abhängigkeit von dem APDU-Befehl.

## Revendications

1. Procédé, qui est réalisé par un système comprenant une carte sans titulaire (10) présentant une forme physique, un terminal utilisateur (20) et un serveur de service (32), et qui est utilisé pour enregistrer un utilisateur dans la carte sans titulaire à **l'aide** d'un code virtuel d'authentification, le procédé comprenant :
la réception (S31), par le terminal utilisateur, d'une application d'enregistrement à partir du serveur de service (32) fournissant un service d'agence d'émission de cartes ;
l'installation (S32), par le terminal utilisateur, de l'application d'enregistrement reçue ;
la réception (S33), par le terminal utilisateur, d'un numéro de carte d'une carte mobile détenue par l'utilisateur, saisi par l'intermédiaire de l'application d'enregistrement ;
la réception (S34), par la carte sans titulaire, de données d'heure courante à partir du terminal utilisateur (20) de l'utilisateur par l'intermédiaire d'une apposition de carte, la carte sans titulaire étant dans un état où l'utilisateur n'est pas enregistré ;
la génération (S35), par la carte sans titulaire, d'un code virtuel pour authentifier l'utilisateur sur la base des données d'heure courante et de données de départ pré-mémorisées à l'aide d'un microprogramme compris dans la carte sans titulaire ;
la transmission (S36), par la carte sans titulaire, du code virtuel au terminal utilisateur ;
la transmission (S37), par le terminal utilisateur, du code virtuel et du numéro de carte de la carte mobile au serveur de service (32) ;
la recherche (S38), par le serveur de service, d'un numéro de carte de la carte sans titulaire stocké dans le serveur de service sur la base du code virtuel ; et
la finalisation (S39), par le serveur de service, de l'enregistrement de l'utilisateur en faisant correspondre le numéro de carte de la carte sans titulaire avec le numéro de carte de la carte mobile,
dans lequel la carte sans titulaire est produite par un fournisseur du service d'agence d'émission de cartes
alors que l'utilisateur n'est pas enregistré,
dans lequel, une fois l'enregistrement de l'utilisateur finalisé, la carte sans titulaire est connectée à la carte mobile dans le serveur de service de sorte que l'utilisateur est enregistré, et le numéro de carte de la carte mobile connectée est utilisé lorsque l'utilisateur demande un paiement hors ligne en utilisant la carte sans titulaire,
dans lequel, lors de la réception, les données d'heure courante sont reçues avec une commande APDU pour piloter le microprogramme, lors de l'apposition de carte, et
dans lequel, lors de la génération, le microprogramme est piloté et le code virtuel est généré en fonction de la commande APDU.

2. Procédé de la revendication 1,
dans lequel le numéro de carte de la carte sans titulaire est transmis à partir d'un serveur de paiement au serveur de service par l'intermédiaire d'un réseau de paiement lorsqu'un paiement est demandé par l'intermédiaire de la carte sans titulaire pour laquelle l'enregistrement de l'utilisateur est finalisé, et
dans lequel le numéro de carte de la carte mobile correspondant au numéro de carte de la carte sans titulaire est transmis à partir du serveur de service au serveur de paiement par l'intermédiaire du réseau de paiement.

3. Système comprenant un dispositif de carte sans titulaire (10, 100) présentant une forme physique, un terminal utilisateur (20) et un serveur de service (32) fournissant un service d'agence d'émission de cartes, le dispositif de carte sans titulaire comprenant :
un module NFC (120) configuré pour effectuer une communication à base de NFC lors de l'apposition du terminal utilisateur d'un utilisateur ; et
un module IC (140) comprenant un microprogramme pour générer un code virtuel pour l'authentification de l'utilisateur,
dans lequel le dispositif de carte sans titulaire est dans un état où l'utilisateur n'est pas enregistré,
dans lequel le module IC est configuré pour :
lors de l'apposition du terminal utilisateur (20), recevoir (S34) des données d'heure courante à partir du terminal utilisateur (20) par l'intermédiaire du module NFC (120) ;
permettre au microprogramme de générer (S35) le code virtuel sur la base des données d'heure courante et de données de départ pré-mémorisées ; et
transmettre (S36) le code virtuel au terminal utilisateur, et
dans lequel le terminal d'utilisateur (20) est configuré pour :
recevoir (S31) une application d'enregistrement à partir du serveur de service (32) ;
installer (S32) l'application d'enregistrement reçue ;
recevoir (S33) un numéro de carte d'une carte mobile saisi par l'intermédiaire de l'application d'enregistrement ;
après la réception du numéro de carte de la carte mobile, lorsque le dispositif de carte sans titulaire est apposé sur le terminal utilisateur, transmettre (S34) les données d'heure actuelle au dispositif de carte sans titulaire ; et
lorsque le code virtuel est reçu à partir du dispositif de carte sans titulaire, transmettre, au serveur de service (32), le code virtuel reçu le numéro de carte de la carte mobile,
dans lequel le serveur de service (32) est configuré pour :
transmettre (S31) l'application d'enregistrement au terminal utilisateur ;
recevoir (S37) le code virtuel et le numéro de carte de la carte mobile à partir du terminal utilisateur ;
rechercher (S38) un numéro de carte de la carte sans titulaire stocké dans le serveur de service sur la base du code virtuel ; et
finaliser (S39) l'enregistrement de l'utilisateur en faisant correspondre le numéro de carte recherché de la carte sans titulaire avec le numéro de carte reçu de la carte mobile ;
dans lequel le dispositif de carte sans titulaire est produit par un fournisseur du service d'agence d'émission de cartes alors que l'utilisateur n'est pas enregistré,
dans lequel, une fois l'enregistrement de l'utilisateur finalisé, le dispositif de carte sans titulaire est connecté à la carte mobile dans le serveur de service de sorte que l'utilisateur est enregistré, et le numéro de carte de la carte mobile connectée est utilisé lorsque l'utilisateur demande un paiement hors ligne en utilisant la carte sans titulaire,
dans lequel les données d'heure courante sont reçues avec une commande APDU pour piloter le microprogramme, lors de l'apposition de carte, et
dans lequel le microprogramme est piloté et le code virtuel est généré en fonction de la commande APDU.
